# EUROPEAN PATENT APPLICATION

(11) **EP 1 377 081 A1**
(43) Date of publication of application: **02.01.2004**
(21) Application number: 02014231.1
(22) Date of filing: 26.06.2002
(51) Int. Cl.: H04Q 3/00

(54) **A method for providing services located in a connectionless data packet network to terminals of a connection oriented communications network, a terminal, a terminal program module and a terminal program module download server system therefor**

(71) Applicant: ALCATEL, 75008 Paris (FR)
(72) Inventor: Kotar, Peter-Christos, 73207 Plochingen (DE)
(74) Representative: Rausch, Gabriele, Dr.

(57) **Abstract**

The invention concerns a method for providing services located in a connectionless (data) packet network to terminals of a connection oriented communications network, comprising a signalling network for the control of network nodes (LEX, TEX) within said communications network, with a gateway (MGW) connecting said communications network (CN) to said packet network (DN), wherein a terminal (TE1) of the communications network (CN) generates a data packet, comprising a communications network address of said gateway (MGW) in a header and a service information for a server (SER) of the packet network (DN), the terminal (TE1) transmits said data packet to the communications network (CN) over a signalling channel, in the communications network (CN) said header is evaluated and the data packet is forwarded to the gateway (MGW) over said signalling network and the media gateway (MGM) extracts the service information and generates a corresponding protocol information to be forwarded to said server (SER) over the packet network (DN), and a terminal (TE1, TE2), a program module and a server system (SC) for downloading said program module therefore.

## Description

The invention relates to a method for providing services located in a connectionless data packet network to terminals of a connection oriented communications network according to the preamble of claim 1, a terminal according to the preamble of claim 4, a program module according to the preamble of claim 5 and a server system according to the preamble of claim 6.

Supplementary services and telecommunication services for users of existing connection oriented mobile and fixed connection oriented networks, further referred to as telephone networks are provided currently by local exchanges and so-called intelligent network platforms within said networks.

Next Generation Networks are connectionless IP (Internet Protocol) based networks, that uses IP based server platforms for serving corresponding IP-terminals. An appropriate control protocol for services in said Next Generation Networks is the so-called Session Initiation Protocol(SIP), specified by the Internet Engineering Task Force (IETF) as document RFC (Request for Comments) 2543. The Session Initiation Protocol is a text based application-layer control (signalling) protocol for creating, modifying and terminating sessions with one or more participants.

Existing telephone networks and next generation networks will co-exist for a long time in the future. To provide users of existing telephone networks with next generation network services, it is possible to correspondingly upgrade network elements of said telephone networks (e.g. local exchanges).

Alternatively, Next Generation Network Services can be provided to terminals of existing telephone networks by using transparent bearer channels (e.g. ISDN B-channels), that are normally used for voice communication or data transfer. However, sending a control message for a service request from an telephone terminal to a Next Generation Network server or vice versa requires a previous set-up of a corresponding speech path. As service protocols often need only short, but frequent information exchange transactions, this results in considerable additional load to the telephone network and thus consumes network resources.

The object of the invention is a provision of next generation services to telephone terminals within the framework of existing protocols without modifications of the connection enabling telephone network elements and without using bearer channels for control messages.

This object is achieved by a method according to the teaching of claim 1, a terminal according to the teaching of claim 4, a program module according to the teaching of claim 5 and a server system according to the teaching of claim 6.

The main idea of the invention is, that a terminal of the communications network requesting a service provided by a server or (a service platform) of a so-called next generation packet network generates a data packet, comprising a communications network address of a gateway serving as interface between said communications network and said packet network. The data packet further comprises service information or a service request to be evaluated by said server. The terminal transmits said data packet to the communications network over a signalling channel. In the communications network, the data packet is forwarded to the gateway by means of a signalling protocol. The gateway extracts the service information and generates a corresponding protocol information to be forwarded to said server over the packet network.

Further developments of the invention can be gathered from the dependent claims and the following description.

In the following the invention will be explained further making reference to the attached drawings in which:
- Fig.1: schematically shows a telephone network connecting to terminals according to the invention and to a gateway further connecting to a server of a packet network, for carrying out a method to provide services according to the invention and
- Fig.2: schematically shows an exemplary sequence of flows of control information for carrying out said method.

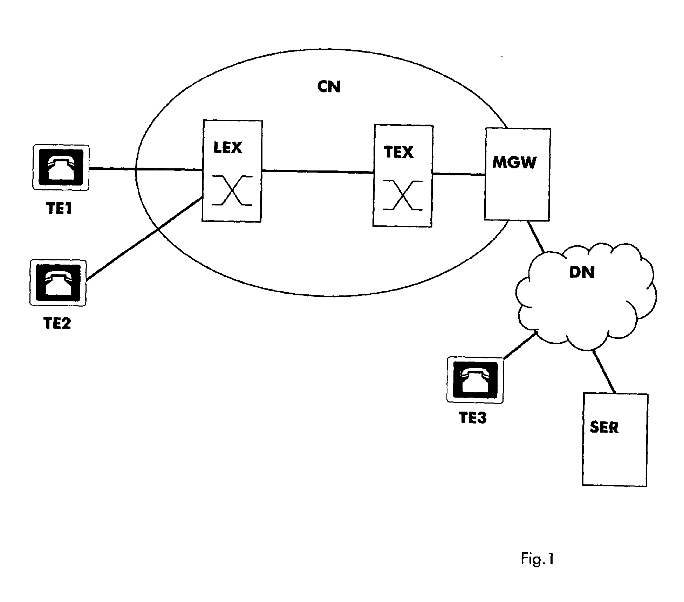

Fig.1 shows a telephone network CN comprising, by way of example, a local exchange LEX and a transit exchange TEX connected to each other, and a gateway MGW. By way of example, a first terminal TE1 and a second terminal TE2 are connected to the local exchange LEX. Further, a (data) packet network DN, connected to a third terminal TE3 and to a server SER, is shown. The Gateway MGW connects, by way of example, the transit exchange TEX to the packet network DN.

The telephone network CN, in principle, can be any connection oriented mobile or fixed communications network like the well known Global System for Mobile Communication (GSM) or the Integrated Services Digital Network (ISDN). The packet network can be any connectionless data network. The third terminal TE3 ,alternatively to the shown direct connection, can be indirectly connected to the packet network DN over the telephone network e.g. using a tunnelling protocol. The gateway MGW can be part of the telephone network or represent a separate server. Further, the server SER can be part of the packet network or representing a separate server. Further, the server can be a single unit or a system with several units, that might be centralised at one location or located in a different locations. In the following, without limiting the invention, it will be assumed that the telephone network is an ISDN network and the packet network is a Next Generation Network (NGN) based on the Internet protocol (IP).

As control protocol for services of Next Generation Networks, the Telecommunication Standardisation Sector of the International Telecommunication Union (ITU-T) has defined a protocol named H.323 protocol or H.323 recommendation, that enables multimedia communication over packet based systems. Another protocol, preferred here, is the so-called Session Initiation Protocol (SIP). This is a text based protocol, specified by the Internet Engineering Task Force (IETF) as document RFC (Request for Comments) 2543. The Session Initiation Protocol is an application-layer control (signalling) protocol for creating, modifying and terminating sessions with one or more participants. These sessions e.g. include Internet multimedia conferences, Internet telephone calls and multimedia distribution. Members in a session can communicate via multicast or via a mesh of so-called unicast relations, or a combination of these. The following description will focus on the Session Initiation Protocol, without limiting the invention to the usage of this protocol.

In Next Generation Networks, the Session Initiation Protocol runs over the Internet Protocol (IP-) layer and controls the communication and service provision between so-called SIP terminals (User Agent Clients) and so-called SIP servers or service platforms (User Agent Servers). But the Session Initiation Protocol is not limited in, that the IP-layer is the only transport layer and is further not limited to Next Generation Networks. SIP may also be used on other transport layers and other networks.

Here, it is proposed to provide to ISDN terminals T1 and T2 new services (Next Generation Network services) running on a SIP server (platform) SER within a IP network DN. The ISDN terminals T1 and T2 shall request services directly from the SIP server SER.

As a telephone network CN like the ISDN is based on totally different signalling protocols like the so-called signalling system number 7 (SS7) inside the network and a so-called D-channel protocol between the terminals T1 and T2 explained later on, a service request and the service itself according to a method according to the invention is realised to be transparent to the telephone network CN (exchanges LEX and TEX). Neither the local exchanges LEX or the transit exchange TEX nor any other nodes of the telephone network CN need to be enhanced with SIP protocol capabilities or to be provided with any new software or hardware. Only the ISDN terminals T1 and T2 according to the invention need to be able to send, receive corresponding commands.

To enable existing ISDN terminals T1 and T2 for the reception of SIP-based Next Generation Network Services, appropriate software may be downloaded from a download server system of the telephone network CN or in the packet network DN to any appropriate terminal T1, T2 or T3 respectively. An internet terminal T3 at users side may act as intermediate node for the download to a final terminal T1. Said server system may comprise one single server or may be a system of different interacting servers.

A terminal in the ISDN is connected to the ISDN network over a signalling channel or D-channel and bearer channels or B-channels. As protocol of the D-channel, the so-called Q.932 protocol defined by the International Telecommunication Union is used. This protocol, among other definitions, defines facility messages for requesting certain service features. A facility message using the so-called Dummy Call Reference (DCR) value and a facility information element within is used as connectionless transport layer for SIP. The facility message with said Dummy Call Reference is connectionless, similar to the connectionless transport of the Session Initiation Protocol over the Internet Protocol. The content of the facility information element, the SIP service request, is transparent for the nodes LEX and TEX in the ISDN network.

Each so-called SIP method defined by the above mentioned document RFC 2543, e.g. the method INVITE, REGISTER, or ACK , is transported over the ISDN network CN in one facility message with the Dummy Call Reference.

To send a service request from the terminal T1 to the server SER, a facility message with the corresponding SIP content is routed to the gateway MGW between the ISDN network CN and the Next Generation Network DN. Therefore, the called party number in the facility message contains the so-called E.164 number of said gateway MGW. Within the ISDN network DN, the SIP information is transported connectionless via SCCP (Signalling Control Connection Part)/TCAP (Transaction Capabilities Application Part) within the framework of the above mentioned signalling system number 7 in a so-called Application Service Element (ASE)

The further routing within the Next Generation Network DN is then based on the routing information in the Session Initiation Protocol. The (SIP) server SER in the Next Generation Network DN is addressed by an IP address or a SIP address, which is not visible for the ISDN network CN.

The protocol between the ISDN network and the Gateway may be any appropriate protocol e.g. the above mentioned signalling system number seven (SS7) or the so-called Digital Subscriber Signalling System number 1 (DSS1) defined for the D-channel of ISDN.

Thus, no change of the ISDN network structure and transport layer is required to provide Next Generation Network services to ISDN terminals.

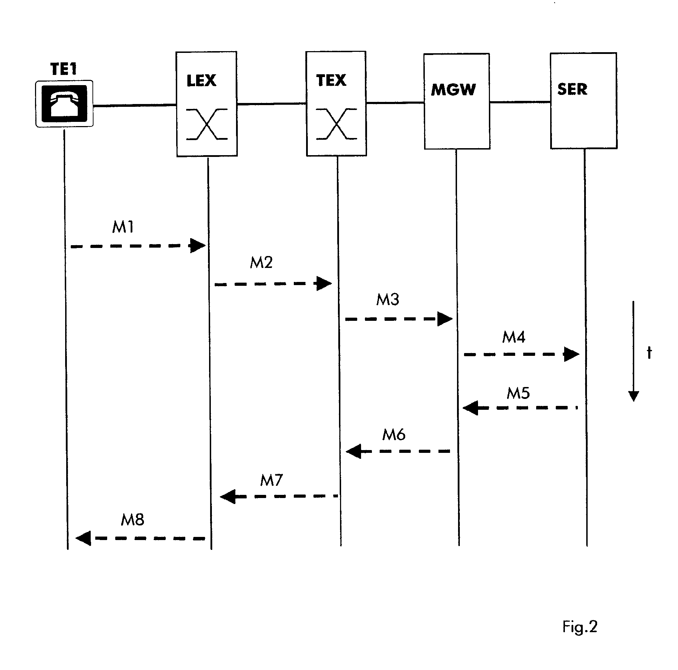

Fig.2 schematically shows an exemplary sequence of flows of control information M1- M8 between the first terminal TE1, the different network nodes LEX, TEX, MGW and the server SER shown in Fig.1 for a service request and response from an to said first terminal. A time arrow t on the left side marks the temporal sequence of the following messages or reports symbolised as arrows:
The first message M1 represents a Q.932 facility message: FACILITY [DCR, called party number: E.164 number of the gateway MGW), facility (e.g. invite, trying, ringing, ok)].
The second message M2 represents an SCCP/TC protocol message wherein the SIP information is transported in an Application Service element (NGN ASE).
The third message M3 represents a DSS1 or SS7 protocol message.
The fourth message M4 represents a SIP message (e.g. register, invite) .
The fifth message M5 represents a SIP message (e.g. trying, ringing, OK).
The sixth message M6 correspondingly (to the third message M3) represents a DSS1 or SS7 protocol message.
The seventh message M7 correspondingly (to the second message M2) represents an SCCP/TC protocol message.
The eighth message M8 represents a Q.932 facility message: FACILITY [DCR, called party number: E.164 number of the terminal TE1), facility (...)].
The facility information element can be coded for transparent SIP transport in one of two following ways:

### 1^{st} method:

octet 3: Protocol Profile: NGN application (SIP)
octet 4 etc.: The components portion contains the SIP protocol elements.

The indication in the protocol profile instructs the ISDN network that the information content is transparent.

### 2^{nd} method:

octet 3 : Protocol Profile: Remote operations protocol
octet 4 etc.: contains the SIP protocol which is transported in an operation as an OCTET STRING.

The operation shall indicate NGN (SIP) application. Therefore it is transparent for the public network.

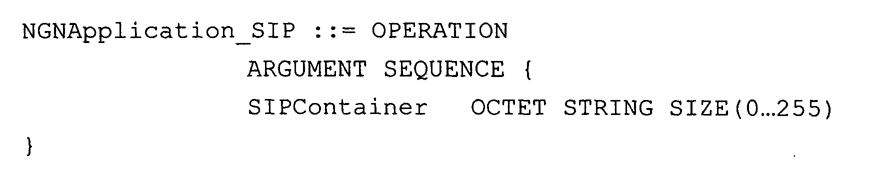

The Gateway will extract the SIP protocol from the facility information element and send it to a SIP server.

The From-Header in SIP contains the address of the calling party (ISDN/SIP terminal). This address is used in the response to the SIP terminal as called party number by the Gateway.

## Claims

1. A method for providing services located in a connectionless (data) packet network (DN) to terminals of a connection oriented communications network (CN), comprising a signalling network for the control of network nodes (LEX, TEX) within said communications network, with a gateway (MGW) connecting said communications network (CN) to said packet network (DN), **characterized in, that** the following steps are performed:
• a terminal (TE1) of the communications network (CN) generates a data packet, comprising a communications network address of said gateway (MGW) in a header and a service information for a server (SER) of the packet network (DN),
• the terminal (TE1) transmits said data packet to the communications network (CN) over a signalling channel,
• in the communications network (CN), said header is evaluated and the data packet is forwarded to the gateway (MGW) over said signalling network and
• the media gateway (MGM) extracts the service information and generates a corresponding protocol information to be forwarded to said server (SER) over the packet network (DN).

2. A method according to claim 1, **characterized in, that** the data packet is based on a signalling channel protocol message between the terminal TE1 and the communications network (CN) with the protocol information encapsulated within said message.

3. A method according to claim 2 **characterized in, that** the signalling channel protocol message represents a facility information requesting a certain service feature in the communications network (CN), wherein the service information is encapsulated as facility information element and wherein an information is comprised that indicates, that said service information is to be transparently forwarded to the gateway (MGW).

4. A terminal (TE1) of a connection oriented communications network (CN) for requesting services located in a connectionless packet network (DN), **characterized in, that** the following means are comprised:
• generation means, that are realised such ,that a data packet, comprising a network address of a gateway (MGW) and a service information for a server (SER) of the packet network can be generated,
• processing means, that are realised such, that a data packet received from the communications network is analysed, service information from said data packet is extracted and according to said service information an action can be carried out and
• sending and receiving means for sending and receiving said data packets.

5. A program module to be executed in a terminal (TE1, TE2) for the control of following functions:
• generation of a data packet, comprising a network address of a gateway (MGW) and a service information for a server (SER) of the packet network (DN),
• analysing service information out of a received data packet and carrying out an action according to said service information.

6. A server system having stored a program module of claim 6, with downloading means for downloading said program module to a terminal (TE1, TE2, TE3).
